(19) Europäisches Patentamt
European Patent Office
Office européen des brevets

(11) EP 2 851 868 A1

(12) **EUROPEAN PATENT APPLICATION**

(43) Date of publication:
25.03.2015 Bulletin 2015/13

(51) Int Cl.:
*G06T 7/00* (2006.01)

(21) Application number: 13004592.5

(22) Date of filing: 20.09.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: ETH Zurich
8092 Zurich (CH)

(72) Inventors:
• **Pollefeys, Marc**
CH - 8006 Zürich (CH)
• **Tanskanen, Petri**
CH - 8953 Dietikon (CH)
• **Meier, Lorenz**
CH - 8952 Schlieren (CH)
• **Kolev, Kalin**
CH - 8057 Zürich (CH)

(54) **3D Reconstruction**

(57) A camera (2) of an apparatus (1) for determining a set of model data describing an object (OB) in three dimensions from two-dimensional image frames (f) taken from the object (OB), is responsible for taking the two-dimensional image frames (f) from the object (OB). A processor of the apparatus (1) is adapted to determine an interim set of model data representing a portion of the object (OB) which is derivable from a set of image frames (f) supplied by the camera (2) so far.

FIG. 1

EP 2 851 868 A1

# Description

Technical Field

The invention relates to an apparatus and a method for determining a set of model data describing an object in three dimensions.

Background Art

The flexible and accurate generation of three dimensional (3D) models of real-world environments has been a long-term goal in computer,vision. Research efforts on 3D content creation from still two dimensional (2D) images has reached a certain level of maturity and has emerged to popular industrial solutions like Autodesk® 123D® Catch.

While high-quality 3D models can be obtained with such systems, the selection of a set of images, which ensures the desired accuracy and completeness, is not a trivial task. Occlusions, complex reflectance properties and self similarities often lead to failure in the reconstruction process but their appearance is difficult to predict in advance, especially for non-experts. However, in existing systems, the set of images is taken from the object and is supplied as a set to a software running on a powerful PC where the 3D model is derived from the 2D images. As indicated above, in case the set of images is incomplete for the intended 3D reconstruction, there may be no chance to mend for the user given that the 3D reconstruction is disconnected in time and space from taking the set of images.

Hence, the existing approaches preclude a casual capture of 3D models in the wild. Moreover, the produced 3D models are determined only at a relative scale and are not provided in metric coordinates. This burdens their applicability in areas where precise physical measurements are needed.

Disclosure of the Invention

Hence, it is desired to provide a mechanism for improving the quality of a set of model data describing an object in three dimensions which set of model data is derived from two-dimensional image frames taken from the object.

According to a first aspect of the present invention, an apparatus is provided for determining a set of model data describing an object in three dimensions from two-dimensional image frames taken from the object. A camera is provided in the apparatus for taking the two-dimensional image frames from the object. A processor of the apparatus is adapted to determine an interim set of model data representing a portion of the object which is derivable from a set of image frames supplied by the camera so far.

According to a second aspect of the present invention, a method is provided for determining a set of model data describing an object in three dimensions from two-dimensional image frames taken from the object by a camera of a portable apparatus by repeatedly taking an image frame from the object, and at the apparatus automatically determining an interim set of model data representing a portion of the object derivable from a set of image frames taken by the camera so far.

Hence, the determination of the set of model data no longer is time-wise and location-wise decoupled from the process of taking the image frames - which image frames are also referred to as images or pictures in the following -, but is coupled to the process of taking image frames by executing this function in the very same apparatus that contains the camera. Each time a new image is taken by the camera of the apparatus and is accepted according to some requirements, a new interim set of model data is determined based on the set of image frames supplied by the camera so far. In other words, the interim set of model data is updated in the apparatus on-the-fly, i.e. each time after a new image frame has been taken by the camera and is accepted for such update, which acceptance may, for example, be made dependent on an anticipated or effective quality of the image and / or an anticipated or effective new content / new view on the object contained in the image. The fewer images are taken from the object so far, the less complete the interim set of model data represents the object to be reconstructed. Portions of the object that do not appear yet on any one of the images taken so far cannot be reflected in the present interim set of model data such that the respective interim set of model data may only represent a portion of the object excluding portions of the object not captured yet by the images taken so far. However, the incompleteness of the model data may in one embodiment be used for indicating to the user during the process of taking the images that the present interim set of model data does not yet represent the complete object. The user may, for example, be advised that additional images may be required for a completion. Such advice may be released to the user in one or more of different ways: In a preferred embodiment, a visual representation of the portion of the model reconstructed up to now based on the interim set of model data is displayed to the user. Here, the user may learn from looking at the visual representation of the model that the object not yet is completed. The visual representation itself, which may include a rotation of the presently reconstructed portion of the model, may make it apparent that another portion of the object still is missing in the reconstruction. Or, the visual representation may explicitly indicate which portions of the object are anticipated to miss in the reconstruction, e.g. by means of a flag, by means of a white area, or by other means.

In another embodiment, the apparatus may instruct the user by visual or acoustical means to take one or more additional images from the object in case the apparatus detects that the interim set of model data does not reflect the object in its entirety yet. The instructions may be as precise as to guide the user to a position an additional image of the object is preferred to be taken for completing the 3D model of the object.

The process of taking images of the object from different viewing positions hence can be performed in an interactive way between the apparatus and the user given that the apparatus may provide feedback to the user at least with respect to the completeness of the 3D reconstruction and, preferably, even in more detail as to advise from which views/positions images are recommended for completing the 3D reconstruction. The user may even be advised where to go to for taking the still required images with the camera. The feedback to the user is attainable since the 3D reconstruction is performed on a processor of the apparatus containing at the same time - and preferably in a common housing of a portable apparatus - the camera for taking the images. This in turn enables the apparatus to provide the feedback to the user while being on site, i.e. at the site of the object to be reconstructed.

A present set of model data derived from the images taken so far is denoted as interim set of model. The set of model data includes information as to the modelled object, i.e. specifically model points defined by three dimensional coordinates that together build a surface of the modelled object. Such points are also referred to as surface points in the following. The set of model data may also be referred to as map in the following.

It is preferred that the apparatus automatically determines / calculates an updated interim set of model data each time a new image is taken. In other words, the interim set of model data is updated on-the-fly, and specifically is updated during taking images from the object. For doing so, it is preferred that the apparatus is a portable apparatus, and specifically is embodied as one of a telecommunication device, and in particular a smart phone, a portable computer, and in particular one of a tablet computer or a laptop computer, an audio player or a camera device, each of the apparatus containing at least a camera for taking the images of the object and a processor for performing the 3D reconstruction based on the image content of the two dimensional images taken by the camera.

In a preferred embodiment, in which a feedback is provided to the user during the 3D reconstruction, the processor of the apparatus is adapted to identify from the set of interim model data a portion of the object that is not described yet by the set of interim model data owed to a lack of appearance in the 2D images taken so far. This portion may be indicated in a visualization of the portion of the object modelled so far as a coloured area (white or grey, for example). The portion of the object not modelled yet may allow determining a new position of the camera wherefrom a picture of the object should be taken in order to cover the still missing portion of the object. A corresponding visual or audio message may be issued to the user such as "take a picture of the object from its back side", for example. Once the one or more additional images showing the missing portion/s of the object in 2D are taken, the present interim set of model data is updated by the information derived from the additional image/s taken. In case there are still portions of the object missing in the updated interim set of model data, further instructions may be issued to the user, e.g. via a display of the apparatus or via speakers. However, in case uncovered portions of the object are no longer detected in the present interim set of model data the present interim set of model data is assumed to reconstruct the complete object and may represent the set of model data for the completely reconstructed object. At this stage, no further suggestions may be given to the user, and the set of model data may be visualized and be displayed on the display of the apparatus, e.g. in a rotating fashion for displaying each side of the reconstructed object.

In a preferred embodiment, the apparatus comprises an inertial sensor assembly providing one or more motion signals. The inertial sensor assembly preferably includes at least one of an accelerometer unit sensing accelerations in at least two and preferably three dimensions and / or a rate sensor unit sensing rotations in at least two and preferably in three dimensions. Such inertial sensor assembly on the one hand allows refining the feedback the apparatus may give to the user. Once a present camera position which is assumed to coincide with the current user position is known a new desired position to go to for taking the additional image may be determined. Either the new position may then be output to the user, or a direction where to head at from the present position may be derived by comparing the present position and the new position. Hence, it is desired that the apparatus is adapted to support the shot sequence.

The inertial sensor assembly may also or additionally support the taking of images in a different way: When images are taken while the user moves, the image quality may suffer, e.g. by blur etc. The inertial sensor assembly of the apparatus may detect a motion / displacement of the user carrying the apparatus. In response to the detection of such motion, the taking of a picture may be blocked. And vice versa, the taking of a picture may only be allowed by the apparatus once the apparatus is detected to be at rest. This concept may apply to a manual release as well as to an automatically controlled release. In the latter case, in one embodiment the release of taking a picture may automatically be triggered once a rest position of the apparatus is detected according to the motion signals. In a very preferred embodiment, a new image is automatically taken, i.e. a trigger of the camera is automatically released, as soon as the camera is detected at rest subsequent to the detection of a motion of the camera. In other words, the termination of a motion of the apparatus is detected based on the one or more motion signals, and the detection of the termination of the motion preferably causes triggering the release of the camera for taking another image.

And third, in addition or alternatively to the foregoing, the inertial sensor assembly may be used for adding a metric scale to the set of model data or the interim set respectively. While it is preferred that a visual tracking module that preferably is implemented as a piece of software running on the processor of the apparatus supports the determination of the set or the interim set of model data from the set of image frames supplied and accepted so far, the modelled object, i.e. the reconstructed object is not scaled yet. A size of the modelled object remains unknown in view of the pure images not allowing determining the size of the object. However, the inertial sensor assembly allows determining a displacement, and consequently a distance between camera positions at rest the images of the object are taken at. In a typical scenario, the user may manually or automatically take a picture of the object from a first position. The user may then walk to a new position and take another picture of the object from there. The path the user took in between the two positions, and preferably a distance representing a baseline between these positions may be determined by means of a displacement tracking module. The displacement tracking module may generally be a piece of software that is adapted to determine a displacement of the apparatus, and especially a displacement between positions of the camera at which the image frames of the object are taken from. The displacement tracking module preferably derives the displacement from the one or more motion signals supplied by the inertial sensor assembly. Now, having two images of the object taken from different positions and knowing the distance between these positions may allow to assign metric coordinates to the model data of the set or the interim set respectively. This may be achieved by a mapping module represented by another piece of software running on a processor of the apparatus.

The embodiments of the present invention propose a complete on-device 3D reconstruction pipeline specifically for a mobile monocular, stereo and time of flight or structured light equipped hand-held apparatus. Dense 3D models may be generated on-site of the object, preferably with an absolute scale. The on-site capability is also referred to as "live" 3D reconstruction on the preferably mobile apparatus such as a mobile phone. Preferably, the user may be supplied with a real-time and preferably interactive feedback. It is ensured at capture time that the acquired set of images fulfils quality and completeness criteria. In a preferred embodiment, motion signals of on-device inertial sensors are included in the 3D reconstruction process to make the tracking and mapping processes more resilient to rapid motions and to estimate the metric scale of the captured object.

The apparatus preferably includes a monocular, stereo, time of flight or structured light image capturing camera and a processor for determining interim sets of model data on-the-fly enabling real-time feedback to the user in the course of the 3D reconstruction process and guide his/her movements.

According to another aspect of the present invention, a computer program element is provided comprising computer readable code means for implementing a method according to any one of the preceding embodiments of the method.

Other advantageous embodiments are listed in the dependent claims as well as in the description below.

Brief Description of the Drawings

The invention will be better understood and objects other than those set forth above will become apparent from the following detailed description thereof. Such description makes reference to the annexed drawings, wherein:

> FIG. 1 schematically illustrates a 3D reconstruction scenario,
> FIG. 2 illustrates a block diagram of an apparatus according to an embodiment of the present invention,
> FIG. 3, 4, 5 and 6 each illustrates a flow chart of a portion of a method according to an embodiment of the present invention, and
> FIG. 7 illustrates an exemplary motion signal provided by an inertial sensor assembly as used in an apparatus according to an embodiment of the present invention.

Modes for Carrying Out the Invention

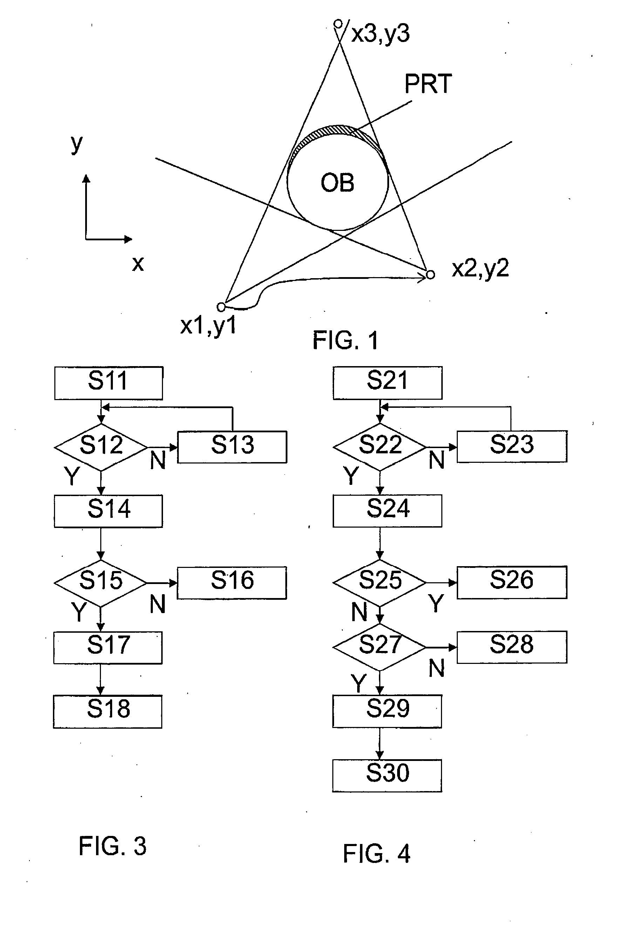

Figure 1 schematically illustrates a scenario possibly underlying the present embodiments of the invention in a top view. An object OB is desired to be reconstructed in digital form by a set of model data, which model data is derived from information contained in images taken by a camera. It is assumed that a user has started at a position x1, y1 and has taken a picture of the object OB from there. Then the user walked to a second position x2, y2 indicated by the arrow and has taken a picture of the object OB from this second position x2, y2, i.e. from a different view. The views from the two positions are indicated by the straight lines emanating from the two positions x1, y1 and x2, y2. As can be derived from FIG. 1, a striped portion PRT of the surface of the object OB is not captured yet in any of the pictures taken yet and as such represents a portion PRT of the object OB not modelled yet. Hence, it would be preferred to take another picture of the object OB e.g. from a position x3, y3 in order to capture the missing portion PRT of the object OB. This example is limited to a 2D illustration, however, in practice it may be preferred to apply 3D coordinates.

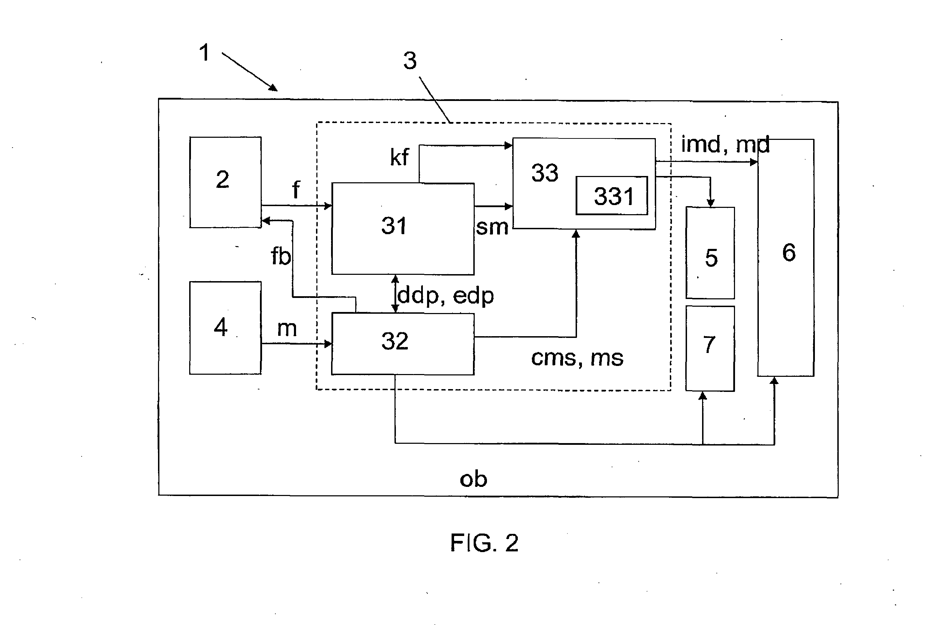

Figure 2 illustrates a block diagram of an apparatus according to an embodiment of the present invention. The apparatus 1 such as a smart phone contains a camera 2, an inertial sensor assembly 4, a processing module 3 typically implemented by a processor and corresponding software, a storage 5, a display 6, and a speaker 7. The processing module 3 contains a displacement tracking module 32, a visual tracking module 31 and a dense modelling module 33 including a mapper 331, all three modules preferably being embodied as software modules which operate asynchronous and thus allow optimally making use of a multi-core processor as preferably is used in the apparatus.

The camera 2 provides image frames f, e.g. with a resolution of 640 x 480 pixel at a rate of e.g. between 15-30 Hz. In the present application, image frames are also referred to as images or pictures and represent 2D image content taken by a camera 2. The inertial sensor assembly 4 may contain one or more of accelerometers sensitive to linear acceleration and gyroscopes sensitive to angular motion, preferably in all three dimensions each, preferably embodied as micro-electromechanical devices. Corresponding motion signals m may be supplied by the inertial sensor assembly 4, for example, at a rate between 50 and 2000 Hz. In a preferred embodiment, the motion signals m representing a linear acceleration may be supplied at 200 Hz, and the motion signals m representing an angular velocity may be supplied at 100 Hz.

The displacement tracking module 32 receives the motion signals m from the inertial sensor assembly 4 and derives a displacement of the camera 2 during the process of taking pictures from the object. For doing so, the motion signals m may be analyzed over time. E.g. it is searched for a positive acceleration peak followed by a negative acceleration peak in an acceleration signal between two stop positions.

However, first it is preferred to estimate a current world to apparatus/camera frame rotation $R_B$ and a current earth-fixed velocity and position by making use of the inertial sensors in the inertial sensor assembly 4. The estimation of the rotation $R_B$ may then be achieved through a standard Extended Kalman Filter. Intuitively the filter design is built around the states $\omega$ (angular rates), the gravity vector g and a heading vector m. In the present example, it is assumed that solely the motion signal of a gyroscope is used for the prediction step in the Kalman filter. The rotations around the X and Y axes are preferred updated with measurements of the gravity vector. The yaw angle is preferred updated with visual measurements and potentially augmented with magnetometer measurements. Preferably the inertial frame to body frame 3x3 right-handed rotation matrix is built by using the unit-length normalized gravity vector $g = e_z$ as the third column, the cross product of the $g \square m = e_y$ as second column and the cross product of $g \square e_y = e_x$ as first column.

The micro-electromechanical inertial sensors of the inertial sensor assembly 4 may show time dependent and device-specific offsets as well as noise. In order to deal with a possible noise and time-dependent bias from the accelerometers, it is preferred in an embodiment to apply an event-based outlier-rejection scheme in a tracking of the path of the apparatus. This precludes motion signal values unreasonably deviating from expected and / or previous motion signal values from contributing to the determination of the displacement of the camera.

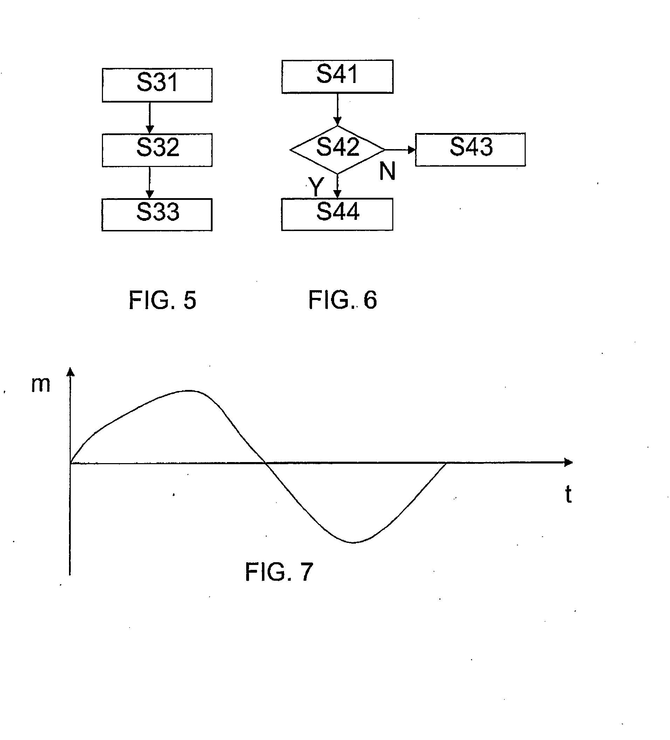

Whenever a 3D accelerometer of the inertial sensor assembly 4 suggests a significant motion - e.g. by one or more of the motion signals exceeding a threshold - it is preferred that a new displacement hypothesis is taken, i.e. it is assumed that the apparatus including the camera is significantly moved by the user from the previous position to a new position. The displacement hypothesis preferably is immediately verified by monitoring the one or more motion signals for a start and a stop event therein. Such events are determined by detecting a low or zero motion before and after a significant displacement of the apparatus which is represented by two peaks of opposite sign and sufficient magnitude in the one or more motion signals. A motion signal m in the form of an acceleration signal representing the scenario of a displacement of the apparatus is schematically shown in FIG. 7.

Once the displacement hypothesis is confirmed, the displacement itself can be determined e.g. by integrating the acceleration signals twice. The displacement may, for example, be defined by start and stop positions at least in a horizontal plane such as in FIG. 1, and or by a vector in combination with a start position.

In a preferred embodiment, the determined displacement ddp is then compared to a displacement edp estimated by the vision tracking module 31, as will be explained later on, for verification purposes yielding a candidate metric scale cms. For this purpose, the estimated displacement may be supplied to the displacement tracking module 32 by the vision tracking module 31, or the determined displacement may be supplied to the vision tracking module 31 by the displacement tracking module 32. In one embodiment, the candidate metric scale cms is supplied to the dense modelling module 33, and specifically to the mapping module 331 thereof for assigning a metric scale to the current 3D model represented by an interim set of model data, e.g. in form of metric coordinates.

Due to inertial and / or visual estimation failures, it is preferred to apply an outlier rejection scheme in the course of determining multiple displacements of the apparatus representing a path the camera takes. Each new pair of measured locations x, y representing a displacement may be added and stored and a complete set of measured locations may preferably be reevaluated using the latest candidate metric scale. The outlier rejection scheme precludes determined unlikely displacements from contributing to the determination of a finally applied metric scale. In case a new displacement is determined not to be an outlier and as a result is an inlier, the next candidate metric scale is computed in a least-squares sense using the inlier set. Otherwise, the outlier displacements preferably are stored for possibly being used in connection with future candidate metric scales but are not used for determining the next metric scale. As soon as the scale estimation converges, the estimated scale is preferably used to make the position determination based on motion signals of the inertial sensor assembly and the position estimates based on the supplied images compatible to each other such that estimated positions can be updated with inertial or visual measurements.

In a preferred embodiment, in addition to providing an estimation of the scene scale, a filtered position estimation may be produced from the determined position which may be used to process frames at lower rates or to mitigate intermediate visual tracking issues e.g. due to motion blur.

Since in the embodiment of FIG. 2, the sample rate of the accelerometers is higher than the image frame rate of the camera, a position of the apparatus 1 is available with each new accelerometer sample and may be updated with the estimated position provided by the vision tracking module 31 whenever a new image frame is received and accepted.

In FIG. 2, a feedback fb from the displacement tracking module 32 to the camera 2 indicates that based on the present displacement derived from the motion signals m, the triggering of taking a picture with the camera 2 may be blocked or released via the feedback fb. An output op is preferably supplied from the displacement tracking module 32 to one of the display 6 or the speaker 7 which advises the user of the apparatus 1 to which position to go to for taking another picture of the object for completing the interim set of model data.

The visual tracking module 31 preferably is adapted to receive the images f taken by the camera 2, to estimate positions the camera 2 has had when an image f was taken, and to generate a first 3D model, which is also denoted as a sparse model given that the model solely provides a few surface points of the modelled object.

At the beginning of the reconstruction process of the sparse model, two images f of the object are taken by the camera 2 from different camera positions in step S11 according to the flow chart of FIG. 3. According to a preferred embodiment, not every image supplied by the camera 2 may be selected for contributing to the sparse model given that the release of the camera may be triggered - automatically or manually - even in situations that are not promising for providing either a sufficient quality of the image, e.g. when the camera is in motion, or for providing a sufficient new view on the object. Hence, in step S12 it is verified if the images received are of sufficient qualify for further processing. Specifically, in step S12 it is verified if either the second image was taken after the camera was moved from a position the first image was taken at, or if the second image was taken after a rest position of the camera was identified following a motion of the camera 2. For doing so, the motion signals of the inertial sensor assembly 4 are evaluated. In case the second image does not qualify (N), in step S13 it is waited for receiving another image which other image is evaluated in the same way in step S12. However, in case the at least two images received do qualify in step S12, in a next step S14 features are extracted from the two images and in step S15 it is verified if these features match in the two images. An image allowed for inclusion in the visual tracking module 31 is also referred to as keyframe. A feature preferably is a key characteristic in a keyframe that may be suited for tracking and or matching purposes in the two or more keyframes and as such hopefully is unique, such as e.g. a corner in an image.

In a preferred embodiment, in step S14 a vector in form of a binary descriptor is used for finding and describing such features. A descriptor may, for example, be a patch of the original image, or a an abstract representation, such as e.g. the SIFT or ORB descriptors.

In a preferred embodiment, outliers are filtered out in this process by using the 5-point algorithm in combination with RANSAC (RANdom SAmple Consensus).

Summarizing, in a first sequence of steps implemented in the visual tracking module 31 characteristic features are identified in the first two keyframes. Keypoints of each feature are preferably described by a vector, i.e. any one of a suitable descriptor, and in step S15 it is verified for each feature if this feature matches in both of the keyframes, i.e. if the feature can be identified in both of the keyframes. If not (N), the feature is discarded in step S16. If so (Y), the feature is allowed to contribute to the sparse model.

In the following step S17 implemented in the visual tracking module 31, a relative pose optimization is performed wherein keypoint matches achieved in step S15 are used for optimizing positions of the camera the two keyframes were taken from and preferred point positions are optimized in the same step, which camera positions are also referred to as camera poses. For doing so and for determining a surface point of the sparse model, keypoint matches are preferably triangulated. For each feature, the 3D position may represent a surface point in an initial sparse model containing only few surface points representing features identified in the two keyframes and hence only covering a portion of the object that is captured by the two keyframes. Such surface point is added to the initial sparse model in the very same step S18. At the same time, such surface point may allow for an estimation of a position of the camera by using e.g. a conventional 5-point or 8-point algorithm.

In another step S17 implemented in the visual tracking module 31, the present initial sparse model is enhanced to a denser but still sparse model. For doing so, features are used, and preferably the already determined features, e.g. on multiple resolution levels. For every corner a pixel patch or abstract feature vector may preferably be stored as a descriptor at the respective level. A matching between features in the different keyframes preferably is implemented by evaluating a distance metric on the feature vector. To speed up the process, it is preferred to only search a segment of the epipolar line that matches an estimated scene depth. After a best match is found, the according points may be triangulated and included as surface points also denoted as model points in the initial sparse model which preferably is subsequently refined with bundle adjustment. Since the gravity vector is known from the displacement tracking module 32, the sparse model is preferably also rotated such that it matches the earth inertial frame. As a result, a sparse populated 3D model of a portion of the object visible in the first two keyframes is generated, and the camera positions during taking the two keyframes are estimated.

FIG. 4 illustrates a flowchart of a method for adding image information of a new image received to the present sparse model, according to an embodiment of the present invention.

Whenever a new image taken by the camera is received by the visual tracking module 31 in step S21, it is verified in step S22 if the image may qualify as a keyframe similar to step S12. Hence, in step S22 it is verified, if either the camera was displaced a certain amount compared to the position where the last image was taken, or if the image was taken after a rest position of the camera was identified following a motion of the camera 2, i.e. the apparatus is held still after a salient motion. Both of the above criteria are preferably detected based on the motion signals m of the inertial sensor assembly 4 and a following evaluation in the displacement tracking module 32. In case none of the criteria is fulfilled (N), the present image is discarded in step S23 and it is waited for the next image taken by the camera that is verified versus the very same criteria in step S22. In case at least one of the criteria is fulfilled (Y), the image represents a new keyframe that contributes to the present sparse model in order to augment and finally complete the present sparse model. Then, in steps S24 and S25 the new keyframe is provided to a mapping thread that accepts surface points included in the present sparse model so far and searches for new surface points to be included for enhancing the present sparse model.

To this end, in step S24 candidates of features extracted from the new keyframe are created that fulfil a given requirement. In order to minimize the possibility that new surface points are created for the sparse model at positions where surface points already exist in the present sparse model, preferably a mask is created to indicate the already covered regions. Since in a typical scene captured by the camera, the object of interest most of the times is arranged in the middle of the scene and as such in the middle of the keyframe. Therefore, it is preferred that only model points that were observed from an angle of preferably 60 degrees or less relative to the current keyframe are added to this mask. This allows capturing both sides of the object but still reduces the amount of duplicates. In step S25 each candidate feature is compared to the mask, and if a projection of the respective candidate feature is inside a certain pixel radius of an already covered region in the mask (Y) the candidate feature is discarded in step S26, i.e. the candidate feature will not contribute to the sparse model.

If this is not the case (N) the subject candidate feature is accepted and is verified for a match in any of the previous keyframes in step S27. The same feature extraction, description and matching may be applied in step S27 as described above in step S15 with respect to the first two keyframes. If the allowed candidate feature can not be identified in any of the previous keyframes(Y), the allowed candidate feature is discarded in step S28. In case the allowed candidate feature can be identified in one or more of the previous keyframes (Y), the allowed candidate feature contributes to the sparse model in step S29 which may correspond to step S17 for the determination of the corresponding surface point of the subject feature in the sparse model.

Analogous to step S18, the present initial sparse model may be enhanced to a denser but still sparse model in step S30.

Bundle adjustment optimization may preferably be performed in the background of the method of FIG. 4.

After a new keyframe is added, it is preferred that a local bundle adjustment step with preferably the closest N keyframes is performed. With a reduced priority, the mapper optimizes the keyframes that are prepared for the dense modelling module. Frames that have already been provided to the module are marked as fixed and their position will not be further updated. With lowest priority, the mapping thread starts global bundle adjustment optimization based on all frames and map points. This process is interrupted if new keyframes arrive.

The 3D dense modelling module 33 preferably receives the selected keyframes from the visual tracking module 31 as well as metric information cms, ms about the captured scene from the displacement tracking module 32. The dense modelling module 33 is triggered automatically when the displacement tracking module 32 detects a salient motion of the apparatus with a minimal baseline.

At the core of the 3D dense modelling module 33 is a stereo-based reconstruction pipeline. In particular, the dense modelling module 33 may preferably include the steps of determining an image mask, computing a depth map, and filtering the depth map.

The process of determining an image mask is illustrated in an embodiment in the flowchart of FIG. 5 and aims at the identification of areas in the keyframes that are suited for determining depths therein. For this purpose, in a first step S31 patches of image pixels are identified in the keyframes that exhibit a sufficient material texture and as such allow for a depth estimation of such image pixels. Uniform surface areas may not sufficiently qualify in this step whereas diversified surface areas of the object are preferred for deriving depth information. The identification of such areas avoids unnecessary computations which have no or only negligible effect on the final 3D model and reduces potential noise. And the identification of such areas may overcome a generation of redundant points by excluding regions already covered by the current point cloud.

Such areas represented by image pixels and referred to as image mask may preferably be identified'by reverting to the Shi-Tomasi measure. The image mask preferably is obtained by thresholding the values at some $\lambda_{min} > 0$. In one embodiment, $\lambda_{min} = 0.1$ and patch areas of size 3 X 3 pixels are used. The Shi-Tomasi score is described in more detail in J. Shi and C. Tomasi, "Good features to track", Conference on Computer Vision and Pattern Recognition, pages 519-528, which is incorporated by reference

In a preferred embodiment, another mask referred to as coverage mask may be estimated in step S32 based on the coverage of the current point cloud in the sparse model. To this end, a sliding window, which contains a set of the recently included 3D model points, is maintained. All model points are projected onto the current image and a simple photometric criterion is evaluated by comparing their colours with the observed ones. If the colour difference is within a certain threshold, the pixel is removed from the mask. Note that points that belong to parts of the scene not visible in the current view are unlikely to have an erroneous contribution to the computed coverage mask. This simple procedure allows preventing the generation of redundant points and keeping the overall size of the 3D model manageable.

A final image mask is obtained by fusing the estimated image mask and the estimated coverage mask in step S33. Subsequent depth map computations are preferably restricted to pixels within the final image mask.

The process of the depth map computation preferably includes running binocular stereo by taking a new keyframe as a reference view and matching it with an appropriate recent image in the series of keyframes received. In one embodiment, a classical technique based on estimating an optimal similarity score along respective epipolar lines may be applied. In an alternate embodiment, a multi-resolution scheme is adopted which involves a down-sampling of the keyframes, estimating depths, and subsequently upgrading and refining the results by restricting computations to a suitable pixel-dependent range.

In a preferred embodiment, a way is provided for choosing an appropriate image pair for the binocular stereo focus. An ideal candidate pair preferably shares a large common field of view, and a small but not too small baseline and similar orientations. In one embodiment, each new keyframe is matched with its predecessor. In another preferred embodiment as shown in the flowchart of FIG. 6, a sliding window is maintained containing the last $N_v$ supplied keyframes. Out of this set of last $N_v$ keyframes, the keyframe is picked that maximizes a suitable criterion for matching with the current view. For two camera positions associate j and k two of the keyframes are associate with this criterion is defined as

$$C(J,K) = \cos\theta_{pose}^{jk} * \cos\theta_{view}^{jk} * \cos\theta_{up}^{jk}$$

wherein

- $\cos\theta_{pose}^{jk}$ denotes the angle between the viewing rays of both cameras at the midpoint of the line segment connecting the mean depth range points along the camera principal rays,

- $\cos\theta_{view}^{jk}$. view is the angle between the principal rays, and

- $\cos\theta_{up}^{jk}$ is the angle between the up vectors of both cameras.

Additionally, it may be preferred to impose the following constraints:

$$5° \leq \theta^{jk}pose \leq 45° \; ;$$

$$5° \leq \theta^{jk}view \leq 45° \; ;$$

$$5° \leq \theta^{jk}up \leq 35° \; .$$

According to the method illustrated in the flowchart of FIG. 6, a new keyframe is received in step S41. In step S42 it is verified if this new keyframe fulfils the above criterion in combination with any of the keyframes of the set. If not (N), the new keyframe is preferably discarded in step S43 and not processed if none of the keyframes in the current sliding window satisfy those constraints with respect to it. If yes (Y), the respective keyframe out of the set builds a pair in step S44 with the new keyframe and a binocular stereo is run on this pair of keyframes for determining depth information therefrom which depth information is included in a dense 3D model.

Preferably, in a final step the estimated depth map is filtered. Preferably, a procedure is applied based on checking consistency over multiple views. In particular, a sliding window containing the last Nd depth maps may be maintained, with e.g. Nd = 5. A depth value at each pixel of the current map is tested on agreement with the maps in the sliding window, i.e. it is warped to the corresponding views and compared with the values stored there. The depth is considered consistent if the estimated difference is within a certain tolerance for at least Nc views with e.g. Nc = 2. Preferably, the unfiltered depth maps are maintained because parts of the scene, not visible in the views included in the current sliding window, may never get the chance to be reconstructed otherwise. This simple but very powerful filtering procedure is able to remove virtually all outliers and build a clean 3D model.

The generated depth map, or respectively filtered depth map may have a form of pixels identified in their x and y position, with a colour value assigned and a depth value assigned.

Finally, the depth map, and preferably the filtered depth map is preferably back projected to 3D, coloured with respect to the reference image and merged with the current point cloud of the sparse model sm. The result is an interim set of 3D, preferably coloured model data representing a portion of the object and specifically its surface which is derivable from a set of image frames f supplied by the camera 2 so far or respectively the keyframes selected there from, which interim set of model data is not metrically scaled yet. In the mapping module 331 this interim set of model data preferably is mapped to the candidate metric scale cms, or, if applicable to the final metric scale ms, such that the modelled objects or portions thereof may be supplied with an idea of their size. The final result is a 3D model represented by a set or interim set of model data in metric coordinates, preferably in form of a coloured point cloud representing the surface of the modelled object. The interim set of model data imd or the final set of model data md - be it with metric scale statements or without - preferably is visualized and displayed on the display 6, and is stored in the storage 5.

In the above embodiments, an efficient and accurate apparatus and method are proposed for dense stereo matching which preferably allows reducing the processing time to interactive speed. The system preferably is fully automatic and does not require markers or any other specific settings for initialization. It is preferred to apply a feature-based tracking and mapping in real time. It is further preferred to leverage inertial sensing in position and orientation for estimating a metric scale of the reconstructed 3D models and preferably to also make the process more resilient to sudden motions. It is preferred, that the apparatus and the method allow for interaction with the user and as thus enable casual interactive capture of scaled 3D models of real-world objects by non-experts. Specifically, inertial sensors of the apparatus may be leveraged to automatically capture suitable keyframes when the apparatus is held still and makes use of an intermediate motion between two stop positions to estimate the metric scale. Visual and / or auditory feedback preferably is provided to the user to enable intuitive and fool-proof operation. In contrast to prior art approaches, the present apparatus and method provide for a 3D reconstruction exclusively on-device / apparatus.

**Claims**

1. Apparatus for determining a set of model data describing an object (OB) in three dimensions from two-dimensional image frames (f) taken from the object (OB), comprising
   a camera (2) for taking the two-dimensional image frames (f) from the object (OB), and
   a processor adapted to determine an interim set of model data representing a portion of the object (OB) which is derivable from a set of image frames (f) supplied by the camera (2) so far.

2. Apparatus according to claim 1, comprising
   a display (6) for displaying a visual representation of the interim set of model data.

3. Apparatus according to claim 1 or claim 2, wherein the processor is adapted to update the interim set of model data each time a new image frame (f) supplied by the camera (2) is accepted for such update.

4. Apparatus according to any one of the previous claims,
   wherein the processor is adapted to identify from the interim set of model data a portion (PRT) of the object (OB) that is not covered yet by the interim set of model data.

5. Apparatus according to claim 4,
   wherein the processor is adapted to generate an instruction to a user of the apparatus (1) to move the apparatus (1) to a new position (x3,y3) for taking another image frame (f) dependent on the identification of the not yet covered portion (PRT) of the object (OB).
   the apparatus (1) comprising an output unit (6, 7) for outputting the instruction.

6. Apparatus according to claim 5,
   wherein the processor is adapted to determine the new position (x3, y3) of the apparatus (1) suitable for taking the other image frame (f), and
   wherein the processor is adapted to define the instruction by comparing the new position (x3, y3) of the apparatus (1) with a known present position (x2, y2).

7. Apparatus according to any one of the preceding claims,
   comprising an inertial sensor assembly (4) providing one or more motion signals (m),
   wherein the processor is adapted to detect a displacement of the apparatus (1) dependent on the one or more motion signals (m), and
   wherein the processor is adapted to trigger the camera (2) to take an image frame (f) at least once a termination of the displacement is detected based on the motion signals (m).

8. Apparatus according to claim 7,
   wherein the processor comprises

   - a displacement tracking module (32) adapted to determine a displacement of the apparatus (1) between positions of the camera image frames (f) are taken at dependent on the one or more motion signals (m),

- a visual tracking module (31) supports a determination of the interim set of model data from the image frames (f) supplied by the camera (2) so far,
- a mapping module (34) for assigning metric coordinates to the model data of the set or the interim set dependent on the determined displacement between the positions of the camera (2) image frames (f) are taken at.

9. Apparatus according to claim 7 or claim 8, wherein the inertial sensor assembly (4) includes at least one of an accelerometer unit.sensing an acceleration in three dimensions and/or a rate sensor unit sensing a rotation in three dimensions.

10. Apparatus according to any one of the preceding claims, which apparatus (1) is a portable apparatus (1), and which apparatus (1) is one of:

- a telecommunication device, and in particular a smart phone;
- a portable computer, and in particular one of a tablet computer or a laptop computer;
- an audio player;
- a camera device.

11. Method for determining a set of model data describing an object (OB) in three dimensions from two-dimensional image frames (f) taken from the object (OB) by a camera (2) of a portable apparatus (1) by repeatedly taking an image frame (f) from the object (OB), and at the apparatus (1) automatically determining an interim set of model data representing a portion of the object (OB) derivable from a set of image frames (f) taken by the camera (2) so far.

12. Method according to claim 11, wherein the interim set of model data is updated at the apparatus (1) on-the-fly each time after a new image frame (f) taken by the camera (2) is accepted for such update.

13. Method according to claim 11 or claim 12, wherein in response to each determination of an interim set of model data a visual representation of the interim set of model data is displayed on a display (6) of the apparatus (1).

14. Method according to any one of the preceding claims 11 to 13, wherein an image frame (f) is taken automatically after a displacement of the apparatus (1) sensed by an inertial sensor assembly (4) is detected to be terminated.

15. Method according to any one of the previous claims 11 to 14, wherein a portion (PRT) of the object (OB) that is not covered yet by the interim set of model data is identified, and wherein an instruction is generated to displace the apparatus (1) to a new position (x3, y3) for taking another image frame (f) dependent on the identification of the not yet covered portion (PRT) of the object (OB).

16. Method according to any one of the preceding claims 11 to 15, comprising evaluating signals of an inertial sensor assembly (4) of the apparatus (1) for determining a displacement between consecutive positions of the apparatus (1).image frames (f) are taken at, deriving the interim set of model data from the image frames (f) supplied by the camera (2) so far, assigning metric coordinates to the model data of the set or the interim set dependent on the determined displacement between the positions of the camera image frames (f) are taken at.

17. Computer program element comprising computer readable code means for implementing a method according to any one of the preceding claims 11 to 16 when executed on a processor of the apparatus.

x3,y3

PRT

OB

y

x

x2,y2

x1,y1

FIG. 1

S11

S12  N  S13

Y

S14

S15  N  S16

Y

S17

S18

FIG. 3

S21

S22  N  S23

Y

S24

S25  Y  S26

N

S27  N  S28

Y

S29

S30

FIG. 4

FIG. 2

S31

S32

S33

FIG. 5

S41

S42

N → S43

Y

S44

FIG. 6

FIG. 7

Europäisches
Patentamt

European
Patent Office

Office européen
des brevets

## EUROPEAN SEARCH REPORT

Application Number

EP 13 00 4592

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/189686 A1 (TANGUAY DONALD O [US] ET AL TANGUAY JR DONALD O [US] ET AL) 30 September 2004 (2004-09-30) | 1-6, 10-13, 15,17 | INV. G06T7/00 |
| Y | * abstract * <br> * paragraph [0024] * <br> * paragraph [0029] * <br> * paragraph [0032] * <br> * paragraph [0035] * <br> * paragraph [0038] * <br> * paragraph [0042] - paragraph [0051] * <br> * paragraph [0068] * <br> * figures 1, 3C * | 7-9,14, 16 | |
| X | US 2013/136341 A1 (YAMAMOTO KOJI [JP]) 30 May 2013 (2013-05-30) <br> * abstract * <br> * figures 3, 5, 8, 9 * | 1,11,17 | |
| Y | US 2010/245544 A1 (NAKAJIMA MITSUYASU [JP]) 30 September 2010 (2010-09-30) <br> * abstract * <br> * paragraph [0040] * <br> * paragraph [0046] - paragraph [0047] * <br> * figure 3 * | 7,9,14 | TECHNICAL FIELDS SEARCHED (IPC) <br><br> G06T |
| Y | SEBASTIAN HILSENBECK ET AL: "Scale-preserving long-term visual odometry for indoor navigation", INDOOR POSITIONING AND INDOOR NAVIGATION (IPIN), 2012 INTERNATIONAL CONFERENCE ON, IEEE, 13 November 2012 (2012-11-13), pages 1-10, XP032313240, DOI: 10.1109/IPIN.2012.6418934 ISBN: 978-1-4673-1955-3 <br> * abstract * <br> * section I.A * | 8,16 | |

The present search report has been drawn up for all claims

| Place of search | Date of completion of the search | Examiner |
|---|---|---|
| Munich | 27 February 2014 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 00 4592

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2014

| Patent document cited in search report | | Publication date | Patent family member(s) | | Publication date |
|---|---|---|---|---|---|
| US 2004189686 | A1 | 30-09-2004 | JP | 2013236380 A | 21-11-2013 |
| | | | TW | I323855 B | 21-04-2010 |
| | | | US | 2004130927 A1 | 08-07-2004 |
| | | | US | 2004133763 A1 | 08-07-2004 |
| | | | US | 2004136241 A1 | 15-07-2004 |
| | | | US | 2004170070 A1 | 02-09-2004 |
| | | | US | 2004181621 A1 | 16-09-2004 |
| | | | US | 2004189686 A1 | 30-09-2004 |
| | | | US | 2008222337 A1 | 11-09-2008 |
| US 2013136341 | A1 | 30-05-2013 | JP | 5269972 B2 | 21-08-2013 |
| | | | JP | 2013114498 A | 10-06-2013 |
| | | | US | 2013136341 A1 | 30-05-2013 |
| US 2010245544 | A1 | 30-09-2010 | CN | 101917547 A | 15-12-2010 |
| | | | JP | 4775474 B2 | 21-09-2011 |
| | | | JP | 2010239564 A | 21-10-2010 |
| | | | KR | 20100109525 A | 08-10-2010 |
| | | | TW | 201044858 A | 16-12-2010 |
| | | | US | 2010245544 A1 | 30-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. SHI ; C. TOMASI.** Good features to track. *Conference on Computer Vision and Pattern Recognition,* 519-528